Europäisches Patentamt

European Patent Office

Office européen des brevets

(19)

(11) Veröffentlichungsnummer: **0 068 106**
**A2**

(12) # EUROPÄISCHE PATENTANMELDUNG

(21) Anmeldenummer: **82103802.3**

(22) Anmeldetag: **04.05.82**

(51) Int. Cl.³: **B 62 D 59/02, B 60 K 17/28**

(30) Priorität: **24.06.81 DE 3124706**

(43) Veröffentlichungstag der Anmeldung: **05.01.83**
**Patentblatt 83/1**

(84) Benannte Vertragsstaaten: **AT BE CH DE FR GB IT LI LU NL SE**

(71) Anmelder: **Weidle, Herbert, Marktplatz 4, D-8944 Grönenbach (DE)**

(72) Erfinder: **Weidle, Herbert, Marktplatz 4, D-8944 Grönenbach (DE)**

(74) Vertreter: **Hübner, Hans-Jürgen, Dipl.-Ing., Mozartstrasse 21, D-8960 Kempten Allgäu (DE)**

(54) **Kupplungseinrichtung für landwirtschaftliche Fahrzeuge.**

(57) Eine Kupplungseinrichtung für landwirtschaftliche Fahrzeuge weist zwei Kupplungsteile (12, 14) auf, wobei der traktorseitige Kupplungsteil einen Aufnahmetopf (16) und der Kupplungsteil (14) des fahrbaren Gerätes einen in diesen Aufnahmetopf (16) genau passenden Einführungstopf (30) aufweist. Der Einführungstopf lagert eine drehbare Verbindungswelle (38), die bei relativer Axialbewegung eine Steckverbindung mit einer Zapfwelle (28) des Traktors bewirkt. Die Verbindungswelle (38) ist über ein Kreuzgelenk (44) mit einer Teleskopwelle (46) verbunden. Eine Druckfeder (64) zwischen Teleskoprohr-Anordnung und Einführungstopf (30) hält letzteren im wesentlichen koaxial mit dem Teleskoprohr ausgerichtet. Eine Ausziehbegrenzungseinrichtung (68) im Teleskoprohr (46) begrenzt dessen Ausziehbewegung.

Die Teleskopwelle (46) ist über ein Kardangelenk (52) mit einer geräteseitigen Arbeitswelle (54) verbunden, und um das Kupplungsteil (14) in vorgegebener Lage für das selbsttätige Kuppeln zu halten, ist eine Federanordnung (74, 76) vorgesehen, die das Teleskoprohr (46) im wesentlichen horizontal und mittig hält.

Der Einführungstopf (30) des fahrbaren Gerätes wird auf solchem Niveau gehalten, daß ein automatisches Kuppeln der Kupplungsteile (12, 14) möglich ist.

Die Erfindung betrifft eine Kupplungseinrichtung für landwirtschaftliche Fahrzeuge, bestehend aus einem, am Traktor angeordneten und dessen Zapfwelle zugeordneten Kupplungsteil und einem, an einem, vom Traktor bewegten fahrbaren Arbeitsgerät angeordneten, der Antriebswelle dieses Arbeitsgerätes zugeordneten weiteren Kupplungsteil.

Eine derartige Kupplungseinrichtung ist in meiner früheren Patentanmeldung (P          ) vorgeschlagen worden, wobei gleichzeitig mit der Kupplung auch die sonstigen Anschlüsse, wie Hydraulikanschlüsse, Lichtanschlüsse usw. erzielt werden. Ein selbsttätiges Kuppeln ist jedoch nur möglich, wenn die beiden Kupplungsteile ziemlich genau miteinander ausgerichtet sind.

Aufgabe der vorliegenden Erfindung ist es eine neuartige Kupplungseinrichtung zu schaffen, die sowohl bei gezogenen, wie auch bei geschobenen landwirtschaftlichen Geräten ein selbstautomatisches Kuppeln gestattet, ohne daß der Fahrer den Taktor zu verlassen braucht.

Diese Aufgabe wird erfindungsgemäß dadurch gelöst, daß das traktorseitige Kupplungsteil ein stirnseitig offener, sich zur Zapfwelle hin abschnittweise verjüngender Aufnahmetopf ist, der einen zylindrischen Endabschnitt aufweist, dessen Achse mit derjenigen der Zapfwelle zusammenfällt und daß das geräteseitige Kupplungsteil eine, aus zwei Elementen bestehende teleskopierbare Antriebswelle umfaßt, die über mindestens einen Teil ihrer Länge von einem stationären Schutzrohr umgeben ist und dessen freies Ende mittels eines Kreuzgelenkes mit einer Verbindungswelle verbunden ist, deren freies Ende eine Steckkupplung für die Zapfwelle des traktorseitigen Kupplungsteils aufweist, daß auf der Verbindungswelle ein relativ drehbarer, sich zum Ende hin komplementär zum Aufnahmetopf verjüngender Einführungstopf gelagert ist, daß auf dem Schutzrohr ein Stützflansch befestigt ist, daß zwischen diesem und dem Einführungstopf eine, das Kreuzgelenk umgebende vorgespannte Schraubenfeder abgestützt ist und daß die telskopierbare Antriebswelle eine Ausziehbegrenzungseinrichtung aufweist.

Gemäß einem weitern Merkmal der Erfindung steht die Antriebswelle mit Kreuzgelenk und Einführungstopf vom Rahmen des fahrbaren Gerätes etwa horizontal bzw. leicht geneigt vor und ist über ein weiteres Kreuzgelenk mit der im fahrbaren Gerät gelagerten Arbeitswelle verbunden, wobei das Schutzrohr mittels einer Federanordnung am fahrbaren Gerät in etwa horizontaler Lage abgestützt ist.

Der Einführungstopf mit seiner Verbindungswelle ist
durch das Kardangelenk universell schwenkbar mit der
Teleskopwelle verbunden. Wenn die Teleskopwelle im
fahrbaren Gerät horizontal gehalten wird, würde der
Einführungstopf aufgrund seines Gewichtes nach unten
hängen. Dank der Schraubenfeder, welche das Kreuzgelenk umgibt wird der Einführungstopf jedoch im wesentlichen koaxial ausgerichtet mit der Teleskopwelle gehalten, wobei die Vorspannung der Feder die Teleskopwelle soweit auszieht, wie dies die Ausziehbegrenzungseinrichtung erlaubt. Je nach Vorspannung der Feder steht
der Einführungstopf der Teleskopwelle koaxial bzw. die
beiden Achsen bilden einen geringen Winkel, so daß die
Achse des Einführungstopfes bzw. die in ihm gelagerte
Verbindungswelle zum freien Ende hin leicht nach unten
neigt. Besonders vorteilhaft ist die Verwendung eines
weiteren Kreuzgelenkes für die Teleskopwelle am fahrbaren Gerät nunmehr würde aber die ganze Teleskopwelle
mit Einführungstopf aufgrund des erheblichen Gewichtes
nach unten schwenken, wenn die Federanordnung nicht vorgesehen wäre, die zwischen Schutzrohr der Teleskopwelle
und dem fahrbaren Gerät angeordnet ist, nämlich zu dem
Zweck, die Teleskopwelle gelenkig,d.h. sowohl seitlich
als auch vertikal schwenkbar in einer mindestens angenähert horizontalen und in der Längsmitteebene der geräte-

- 4 -

seitigen Arbeitswelle zu halten. In der Praxis stört
es nicht, wenn die Teleskopwelle mit einer leichten
Neigung aufgehängt bleibt, sofern diese Neigung nur
innerhalb des Fangbereiches des Aufnahmetopfes am Traktor liegt.

Mit der erfindungsgemäßen Kupplungseinrichtung findet
ein automatische Kuppeln sowohl bei gezogenen wie auch
bei geschobenen fahrbaren Geräten statt. Der leicht hängende Einführungstopf des fahrbaren Gerätes läuft während
der Näherungsbewegung der Fahrzeuge in den Aufnahmetopf
ein. Es erfolgt ein Kuppeln der Verbindungswelle im Einführungstopf mit der Zapfwelle des Traktors. Anschließend
folgt die mechanische Verbindung des Traktors mit dem Gerät, wobei das Teleskoprohr eine weitere Näherung der
beiden Fahrzeuge erlaubt.

Insbesondere im Fall von sogenannten frontseitigen Geräten , also fahrbaren landwirtschaftlichen Geräten, wie
beispielsweise Mähwerken, die von der Frontzapfwelle des
Traktors angetrieben werden, ist auf diese Weise eine
vom Traktor aus gesteuerte mechanische Verbindung des
fahrbaren Gerätes mit dem Traktor über einen sogenannten Hitch-Dreieckträger möglich und zwar wird beim weiteren Zusammenfahren des Teleskoprohres das traktorseitige Dreieck in das geräteseitige Dreieck eingefahren, wonach die traktorseitige Hydraulik das traktorseitige Hitch-Dreieck anhebt, bis die beiden Hitch-
Dreiecke in bekannterweise ineinander greifen und
die mechanische Kupplung zwischen Traktor und Gerät
bewirkt ist.

Die Erfindung ist einfach ausführbar. Es können handelsübliche teleskopierbare Kardangelenkwellen verwendet
werden, die lediglich mit zwei Querbohrungen im Innenrohr und im Außenrohr versehen werden, in die Bolzen
eingesteckt werden, welche die Enden eines Ausziehbegrenzungsseiles halten. Wesentlich ist, daß die Außenkontur des Einführungstopfes der Innenkontur des Aufnahmetopfes entspricht, wobei vorzugsweise zwei zylindrische Abschnitte in beiden Töpfen vorgesehen sind,
die ineinander passen. Zwischen den beiden zylindrischen Abschnitten sind konische Verbindungsabschnitte
vorgesehen, die beiden konischen Abschnitte der beiden
Töpfe haben vorzugsweise gleiche Konizität. Der Einführungstopf liegt damit im Kupplungszustand eng im
Aufnahmetopf und lagert mittels mindestens eines Wälzlagers die Verbindungswelle, die ihrerseits mit dem
Kardangelenk der Teleskopwelle über eine Steckverbindung verbunden ist. Der äußere zylindrische Abschnitt
des Einführungstopfes umgibt eng die vorgespannte
Schraubenfeder und weist einen inneren Anlagesatz für
diese auf. Es ist dann nur noch ein Stützflansch auf

- 6 -

dem handelsüblichen äußeren Schutzrohr der Teleskopwelle zu befestigen und die Schraubenfeder einzusetzen,
um die Montage am vorstehenden Ende der Teleskopwelle
zu vervollständigen.

Die geräteseitige Aufhängung der Teleskopwelle erfolgt
im einfachsten Fall mittels zweier Schrauben-Zugfedern,
die ebenfalls am Schutzrohr aufgehängt sind und von
dort jeweils schräg nach außen und nach oben zum Rahmen des Gerätes verlaufen. Diese Zugfedern stabilisieren das Teleskoprohr in der gewünschten mittleren Vertikalebene und auch in einer mindestens angenäherten
Horizontallage. Gleichwohl erlauben diese Federn ein
seitliches Verschwenken und ein Auf- und Abwärtsschwenken des Teleskoprohres.

Im Vorstehenden ist die Erfindung in einer bevorzugten
Ausführung beschrieben, bei welcher die Teleskopwelle dem
fahrbaren Gerät zugeordnet ist. Es liegt jedoch im Rahmen
der Erfindung den Aufnahmetopf am Gerät und die Teleskopwelle
am Traktor vorzusehen.

Weitere Merkmale der Erfindung bilden die Gegenstände
der Unteransprüche.

Anhand der Zeichnung, die ein Ausführungsbeispiel darstellt, sei die Erfindung näher beschrieben.

Es zeigt:

FIG. 1 Eine teilweise geschnittene Seitenansicht
der neuen Kupplungseinrichtung,

FIG. 2 eine Draufsicht auf die geräteseitige Aufhängung
für das Teleskoprohr gemäß Fig. 1 und

FIG. 3 eine stirnseitige Ansicht der geräteseitigen
Teleskoprohr-Aufhängung.

Die allgemein mit 10 bezeichnete Kupplungseinrichtung
hat ein traktorseitiges Kupplungsteil 12 und ein geräteseitiges Kupplungsteil 14. Das traktorseitige Kupplungsteil 12 hat einen Aufnahmetopf 16, der ein kreiszylindrisches Rohrstück 18, einen sich nach links erweiternden konischen Abschnitt 20, einen größeren kreiszylindrischen Abschnitt 22 und einen offenen Endkonus 24 aufweist. An dem kleineren zylindrischen Abschnitt 18 ist
ein Befestigungsflansch 26 angeschweißt, der - im Ausführungsbeispiel - an der Frontseite eines Traktors angeschraubt werden kann, derart, daß dessen Zapfwelle 28
mit radialem Abstand konzentrisch im Abschnitt 18 aufgenommen ist.

Das geräteseitige Kupplungsteil 14 weist einen Einführungstopf 30 auf, der aus zwei zylindrischen Abschnitten
32, 34 und einem dazwischenliegenden konischen Abschnitt 36

- 8 -

besteht. Der Abschnitt 32 paßt in den Abschnitt 18 des Aufnahmetopfes. Genauso paßt der zylindrische Abschnitt 34 in den Abschnitt 22 des Aufnahmetopfes. Die Konizität und die Mantellänge der konischen Abschnitte 20 und 36 entsprechen einander, so daß der Einführungstopf 30 in den Aufnahmetopf 16 paßt. Der Aufnahmekonus 24 des Aufnahmetopfes 16 vergrößert den Fangbereich bei Fehlausrichtungen des Kupplungsteils 14.

Im Inneren des Einführungstopfes 30 ist eine Verbindungswelle 38 mittels eines Kugellagers 40 drehbar gelagert. Diese Verbindungswelle 38 hat drei abgesetzte Wellenabschnitte, nämlich einen vorderen Innenkeilnut-Abschnitt, der auf den Außenkeilnut-Abschnitt der Zapfwelle 28 paßt, einen angrenzenden Lagerabschnitt für das Kugellager 40 und schließlich einen Keilnut-Abschnitt, der in einen Innenkeilnut-Abschnitt 42 eines Kreuzgelenkes 44 eingesteckt ist. Die Anordnung ist so getroffen, daß eine Axialbewegung der Verbindungswelle 38 im Keilnutrohr 42 ausgeschlossen ist, z.B. über einen Querbolzen, der nicht weiter dargestellt ist. Außerdem ist die Lagerung so ausgebildet, daß der Einführungstopf 30 bei Axialbelastung diese auf das Keilnutrohr 42 überträgt. Einführungstopf 30 und Verbindungswelle 38 sind also axial unverschiebbar.

Das Kreuzgelenk 44 gehört zu einer Teleskopwelle 46, die ein Innenrohr 48 und ein Außenrohr 50 aufweist, wobei das Innenrohr 48 mit dem Kreuzgelenk 44 verbunden ist, während das Außenrohr 50 mit einem weiteren Kreuzgelenk 52 verbunden ist, welches seinerseits antriebsmäßig mit einer Arbeitswelle 54 verbunden ist, die im Rahmen 56 des fahrbaren Gerätes gelagert ist. Aus Gründen des Unfallschutzes werden solche Teleskopwellen 46 mit einem Teleskoprohrschutz ausgestattet, welcher aus einem, auf dem Außenrohr 50 relativ drehbar gelagertem äußeren Schutzrohr 58 und einem auf dem Innenrohr 48 relativ drehbar gelagerten inneren Schutzrohr 60 besteht. Die beiden Schutzrohre bleiben während der Drehung der Teleskopwelle 46 bekanntermaßen in Ruhe.

Auf den äußeren Schutzrohr 58 ist nun ein Flansch 62 aufgesetzt, der einen äußeren Bund aufweist, welcher etwa auf demselben Durchmesser wie der zylindrische Abschnitt 34 des Einführungstopfes 30 liegt. Zwischen dem Flansch 62 und dem Einführungstopf 30 ist eine Schraubenfeder 64 vorgesehen, die einerseits vom Bund des Flansches 62 und vom zylindrischen Abschnitt 34 des Einführungstopfes 30 umgriffen wird. Das eine Ende der Feder 64 liegt am Flansch 62 an und das andere Ende stützt sich an einem Absatz 66 des Einführungstopfes 30 ab. Die Feder 64 wird unter einer gewissen Vorspannung gehalten, und zwar mittels einer Ausziehbegrenzungseinrichtung, die aus einem Zugseil 68 besteht, welches an einem Querbolzen 70 am linken Ende des Außenrohres 50 der Teleskopwelle 46 und einem Querbolzen 72 im Innenrohr 48 dieses Teleskoprohres aufgehängt ist. Der Bolzen 70 muß außerhalb des Einschubbereiches des Innenrohres 48 liegen. Dieser Einschubbereich wird durch die Zusammendrückbarkeit der Feder 64 bestimmt.

Dank der beschriebenen Ausbildung wird der Einführungstopf 30 durch die vorgespannte Feder 64 im wesentlichen koaxial mit dem Teleskoprohr 46 gehalten, gleichwohl erlaubt die Feder 64 in Verbindung mit der Ausziehbegrenzungseinrichtung ein Zusammenfahren des Teleskoprohres, wobei die Feder 64 zunehmend gespannt wird.

Um das gesamte Kupplungsteil 14 am fahrbaren Gerät im wesentlichen in einer horizontalen Mittellage zu halten, ist eine Federanordnung vorgesehen, die aus zwei Schrauben-Zugfedern 74, 76 besteht, welche an einem Querbügel 78 aufgehängt sind, der an einem Haltearm 80 befestigt ist und der am Rahmen 56 des fahrbaren Gerätes derart gelenkig gelagert ist, daß er sowohl nach beiden Seiten schwenken kann, wie auch eine Auf- und Abwärtsbewegung erlaubt. Dieser Haltearm 80 weist einen Bügel 82 auf, der mit einer Querachse versehen ist, welche in einem Längsschlitz 84 eines längsverlaufenden Bodensteges 86 längsverschiebbar geführt ist. Die beiden Schraubenfedern 74,76 sind achssymmetrisch schräg nach außen und nach oben geführt und an Rahmenkonsolen des fahrbaren Gerätes aufgehängt.

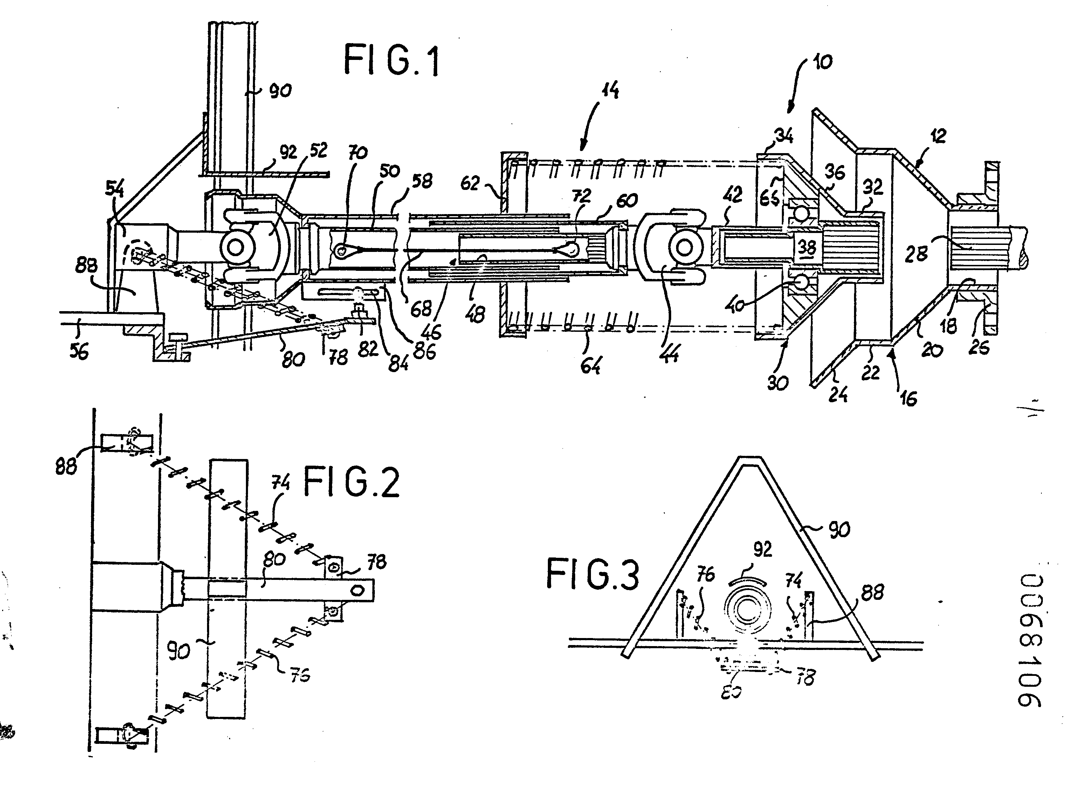

Die ganze Federanordnung 74, 76 befindet sich unterhalb eines dreieckförmigen Hitch-Trägers 90, der zur mechanischen Verbindung des fahrbaren Gerätes mit dem Traktor dient, welcher einen entsprechenden Hitchträger aufweist, der jedoch hydraulisch anhebbar ausgebildet ist. Ein wichtiges Merkmal für das Einfahren des traktorseitigen Hitchträgers besteht in einem Führungsbügel 92, der unmittelbar oberhalb des Abdecktopfes des äußeren Schutzrohres für das Kardangelenk 52 angeordnet ist und im Querschnitt entsprechend der Krümmung des Abdecktopfes leicht gewölbt ist, wie Figur 3 veranschaulicht. Beim Einfahren des traktorseitigen Hitch-Dreieckes in das geräteseitige Dreieck 90 kann das traktorseitige Dreieck somit auf diesem Bügel 92 gleiten und ist damit geführt, so daß es nicht an der Teleskopwelle bzw. dessen Schutzvorrichtung anstoßen kann.

Die Federn 74, 76 sind stark genug ausgebildet, um trotz des erheblichen Gewichtes des relativ langen Kupplungs-

- 12 -

teils 14 dieses Teil in einer mindestens angenäherten
Horizontallage zu halten. Für das selbsttätige Kuppeln
der beiden Kupplungsteile 12, 14 schadet es nichts, wenn
die Teleskopwelle um die Querachse des Kreuzgelenkes 52
leicht nach unten geneigt ist, sofern nur der Fangbereich
des Fangkonus des Aufnahmetopfes 16 nicht überschritten wird. Da die beiden Federn 74, 76 auch seitlich
nach außen wirken, halten sie das Teleskoprohr in einer vertikalen Mittelebene, wobei aber ohne weiteres
ein verschwenken nach beiden Seiten des Teleskoprohres
wie auch eine Ab- und Aufwärtsbewegung dieses Rohres
möglich sind.

Es versteht sich, daß die Federanordnung 74 und 76
auch anders ausgebildet sein kann. Es können genau so
gut Druckfedern vorgesehen sein, die das Teleskoprohr
etwa horizontal halten. Genau so gut lassen sich auch
andersartige Federn, beispielsweise Blattfedern verwenden.

- 1 -

PATENTANSPRÜCHE

Kupplungseinrichtung zum Kuppeln der Antriebsverbindung einer Arbeitswelle eines fahrbaren
Arbeitsgerätes mit der Zapfwelle eines landwirtschaftlichen Fahrzeuges, bestehend aus einer am
Arbeitsgerät angeordneten Teleskopwelle mit an
beiden Enden vorgesehenen Kardangelenken, welche
die Teleskopwelle einerseits mit der Arbeitswelle
und andererseits mit einer Verbindungswelle verbinden, wobei das freie Ende der Verbindungswelle
als Steckkupplungsabschnitt ausgebildet ist, welcher
mit einem komplementären Kupplungsabschnitt der Zapfwelle zusammenwirkt, weiterhin bestehend aus einer
Auffangglocke, welche einem der Kupplungsabschnitte
zugeordnet ist, einer Abstützeinrichtung für die
Teleskopwelle, sowie aus einer Federanordnung, welche die Teleskopwelle in ausgefahrenem Zustand und
die Verbindungswelle in angenäherter Horizontalstellung hält, gekennzeichnet durch folgende Merkmale

a) die Teleskopwelle (46) ist von einem zweiteiligen Teleskopschutzrohr (58, 60) umgeben und in diesem drehbar angeordnet,

b) auf der Verbindungswelle (38) ist ein äußerer Stützring (30) relativ drehbar jedoch axial unverschiebbar abgestützt,

c) auf dem feststehenden äußeren Rohr (58) des Teleskopschutzrohres (58, 60) ist ein Stütztflansch (62) befestigt, und

d) die Federanordnung besteht aus einer einzigen Schraubendruckfeder (64) welche zwischen dem Stützring (30) und dem Stützflansch (62) eingesetzt ist.

2. Kupplungseinrichtung nach Anspruch 1, dadurch gekennzeichnet, daß der Stützring (30) als ein sich zum freien Ende der Verbindungswelle (38) hin verjüngender Einführungstopf ausgebildet ist, welcher mindestens eine zylindrische Außenwand (32; 34) aufweist, die innerhalb einer Zylinderwand (18; 22) der die Zapfwelle (28) umgebenden Auffangglocke (12) verschiebbar geführt ist.

3. Kupplungseinrichtung nach Anspruch 2, dadurch gekennzeichnet, daß der Einführungstopf (30) und die Auffangglocke (12) jeweils zwei im Axialabstand liegende Zylinderwände (32, 34; 18, 22) aufweisen, zwischen denen sich jeweils ein konischer Mantelabschnitt (20;36) erstreckt.

4. Kupplungseinrichtung nach einem der Ansprüche 1 bis 3, dadurch gekennzeichnet, daß innerhalb der Rohre (48,50) der Teleskopwelle (46) eine Ausziehbegrenzungseinrichtung (68, 70, 72) angeordnet ist.

5. Kupplungseinrichtung nach Anspruch 4, dadurch gekennzeichnet, daß die Ausziehbegrenzungseinrichtung aus einem sich axial erstreckenden Zugorgan besteht.

6. Kupplungseinrichtung nach Anspruch 5, dadurch gekennzeichnet, daß das Zugorgan aus einem Seil, Kette, oder dergl. besteht, und mit seinen Enden an Querbolzen (70, 72) der beiden Rohre (48, 50) der Teleskopwelle aufgehängt ist.

7. Kupplungseinrichtung nach Anspruch 1, dadurch gekennzeichnet, daß die Abstützeinrichtung zwei an einer Verbindungseinrichtung (78-86) des feststehenden Schutzrohres (58) angreifende Aufhängefedern (74) aufweist.

- 4 -

8. Kupplungseinrichtung nach Anspruch 7, dadurch gekennzeichnet, daß die Verbindungseinrichtung (78-86) unterhalb des Schutzrohres (58) angeordnet ist.

# FIG.1

# FIG.2

# FIG.3

0068106